(19)

Europäisches
Patentamt
European
Patent Office
Office européen
des brevets

(11) **EP 3 236 303 A1**

(12) **EUROPEAN PATENT APPLICATION**

(43) Date of publication:
**25.10.2017 Bulletin 2017/43**

(51) Int Cl.:
***G02B 21/00*** (2006.01)

(21) Application number: **16166114.5**

(22) Date of filing: **20.04.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Medizinische Universität Innsbruck
6020 Innsbruck (AT)**

(72) Inventors:
• **Jesacher, Alexander
  6020 Innsbruck (AT)**
• **Roider, Clemens
  6020 Innsbruck (AT)**

(74) Representative: **Grünecker Patent- und
Rechtsanwälte
PartG mbB
Leopoldstraße 4
80802 München (DE)**

(54) **CONFOCAL MICROSCOPE WITH IMPROVED RESOLUTION**

(57)    The invention provides a confocal microscope comprising a pixelated photodetector, a fiber bundle (6) comprising two or more optical fibers (8), wherein the fiber bundle (6) is arranged such that light emerging from a specimen can be coupled into the optical fibers (8) of the fiber bundle (6), and a dispersive element, wherein the dispersive element is arranged between the fiber bundle (6) and the pixelated photodetector.

FIG. 1

**Description**

The invention relates to a confocal microscope and to a method of obtaining an image of a specimen when using confocal microscopy.

For confocal scanning microscopy it is known to use a point-wise excitation of a specimen via a light source, typically via an excitation laser. In the optical path of the light emerging from the specimen, a pinhole is arranged at the confocal plane of an imaging lens to eliminate out-of-focus light. The light entering the pinhole is imaged on a single light sensor. The size of the pinhole is decisive for the light throughput as well as for the spatial resolution. When the pinhole is made smaller, a higher resolution can be obtained, however, at the cost of light throughput. In practice, most confocal microscopes use a pinhole diameter that approximately matches the focal spot size.

From WO 2016/020459 A1, a high resolution scanning microscope is known, which allows discriminating between at least two wavelength ranges. In this known system, a spatially resolving, two-dimensional detector is used instead of a combination of a pinhole with a single light sensor. A sample is excited by illumination radiation to emit fluorescence radiation in such a way that the illumination radiation is focused at a point in or on the sample to form a diffraction-limited illumination spot. The point is imaged in a diffraction image on the spatially resolving, two-dimensional detector in a diffraction-limited fashion. The two-dimensional detector has a spatial resolution that resolves a diffraction structure of the diffraction image. For the purposes of discriminating between at least two predetermined wavelength ranges in the fluorescence radiation of the sample, a number of Airy disks corresponding to the at least two predetermined wavelength ranges are generated on the two-dimensional detector, which Airy disks are offset laterally from one another such that the diffraction image consists of the mutually offset Airy disks. The two-dimensional detector comprises an optical-fiber bundle and a detector array connected thereto. For the purpose of forming the different Airy disks, a spectrally selective element is positioned in front of the optical-fiber bundle.

This known system improves the standard implementation of confocal scanning microscopy by increasing the spatial resolution and allowing for a certain wavelength analysis. This system, however, has the drawback that only a limited spectral resolution is possible, since Airy disks corresponding to predetermined wavelength ranges need to be imaged separately by the two-dimensional detector in an offset manner. It is, thus, not possible to create a continuous spectrum of the radiation emerging from the illuminated spot of the specimen. As a consequence, the applicability of the disclosed system is limited.

It is therefore the object of the present invention to provide an improved confocal microscope and an improved method of obtaining an image of a specimen using confocal microscopy.

This object is achieved with a confocal microscope according to claim 1 and a method of obtaining an image of a specimen using confocal microscopy according to claim 10. Preferred embodiments are specified in the dependent claims.

According to the present invention, a dispersive element is arranged between the fiber bundle and the pixelated photodetector, or, in other words, in the optical path behind the fiber bundle. In this way, it is possible to create and record a continuous spectrum of light output by the optical fibers of the fiber bundle. This continuous spectrum may be used for a plurality of investigations so that the applicability of the confocal microscope is improved.

At the same time, the use of the fiber bundle allows to increase the spatial resolution of the microscope while allowing for high light collection efficiency at the same time.

The confocal microscope may particularly be a confocal scanning microscope. Thus, the microscope may additionally comprise an excitation light source, particularly an excitation laser. The microscope may further comprise an objective for focusing light emitted by the excitation light source at a predetermined position of a specimen. The microscope may further comprise a stage for mounting the specimen. This stage may be movable in at least two directions. The stage may particularly be movable in three orthogonal directions. In this way, it is possible to three-dimensionally scan a specimen.

The microscope may further comprise a tube lens for focusing light emerging from the specimen.

The light emerging from the specimen may particularly be caused by a point-wise excitation via the excitation light source. The light emerging from the specimen may be fluorescent or phosphorescent light, or scattered light, such as light originating from Raman scattering.

The pixelated photodetector may correspond to a multi-line spectrometer camera. The pixelated photodetector may, particularly, be a CCD (charge-coupled device) detector. Other photodetectors such as an active-pixel image sensor are conceivable as well.

The pixelated photodetector may be connected to a computing device for readout of the pixelated photodetector.

The optical fibers of the fiber bundle may be multimode collection fibers. The core diameter of the optical fibers may be greater than 10 $\mu$m.

The optical fibers may be individually coated, for instance with a plastic layer. The two or more optical fibers may be further contained in a protective tube so as to form an optical fiber cable.

The optical fibers may particularly be glass fibers.

The fiber bundle may be a round two-linear fiber bundle. In other words, the fiber bundle may have a first and a second end, wherein the optical fibers at the first end are arranged in an approximately round configuration, while at the second end they are arranged in a linear configuration. The fiber bundle may, for instance, include seven fibers that are hexagonally packed at one end of the bundle, while being arranged along a straight line at the other end. The fiber bundle may also include more than seven fibers, for instance 19 fibers.

The round end of the fiber bundle may be the input end for the light emerging from the specimen, while the other end may be the output end directing the light towards the dispersive element.

The dispersive element may particularly be a diffraction grating. Alternatively or additionally, a dispersive prism may be used as dispersive element.

The dispersive element may particularly be arranged between an output end of the optical fibers of the fiber bundle and the pixelated photodetector. In other words, in its optical path, light emerging from a specimen first passes the fiber bundle and then hits the dispersive element, before being imaged at the pixelated photodetector.

The dispersive element and the pixelated photodetector may form or be part of a spectrometer. The spectrometer may comprise further imaging optics.

The microscope may further comprise an array of lenslets for coupling the light into the optical fibers of the fiber bundle. In this way, the coupling efficiency may be further increased by preventing losses otherwise caused by gaps between the individual fibers.

The lenslets may be particularly hexagonal lenslets. In other words, each of the lenslets of the array of lenslets me have a hexagonal shape or cross section. The hexagonal lenslets may again be hexagonally arranged so that, for instance, an inner hexagonal lenslet is surrounded by six hexagonal lenslets. The lenslets may directly contact each other at the respective interfaces between the lenslets.

The fiber bundle, the dispersive element, and the pixelated photodetector may be arranged such that an individual spectrum is recordable for the light of each optical fiber of the fiber bundle. In other words, the confocal microscope may be configured such that light output by each fiber of the fiber bundle is split up by the dispersive element in a respective spectrum that is recorded by the pixelated photodetector in a spatially resolved manner.

In this context, a "spatially resolved manner" refers to a separation on the photodetector of the individual spectra obtained from the optical fibers of the fiber bundle. In particular, for each individual spectrum one or more pixel rows of the pixelated photodetector may be used to record the spectrum. Different pixel rows of the pixelated photodetector may be used to record the individual spectra corresponding to the optical fibers of the fiber bundle. In particular, the arrangement of the spectra on the pixelated photodetector may correspond to the relative arrangement of the optical fibers at the output end of the fiber bundle, particularly to the linear arrangement of the fibers at the output end.

Different pixel columns of the pixelated photodetector may, thus, correspond to different wavelengths or frequencies. The wavelength or frequency resolution may be limited by the size of the pixels of the pixelated photodetector, thus, each pixel column of the pixelated photodetector may actually correspond to a frequency or wavelength range. This frequency or wavelength range per pixel may be characterized by its central frequency or wavelength, for instance.

The microscope may further comprise a processing element configured to process the recorded spectra by a method comprising the following steps:

determining, from each of the individual spectra, a subband intensity of a selected spectral band, by adding up the intensity values of the respective individual spectrum falling within the selected band;

applying a positional shift to the individual spectra or to the determined subband intensities, the positional shift accounting for the spatial arrangement of the optical fibers of the fiber bundle, particularly at an input end thereof, or of the lenslet array used for coupling light into the optical fibers of the fiber bundle; and

adding up the individual spectra or the subband intensities after applying the positional shift.

The adding up of the individual spectra or the subband intensities is particularly performed in a spatially resolved manner. In other words, only spectra or subband intensities are added up that are in the same position after applying the positional shift, i.e. have the same spatial coordinates.

The processing element may particularly correspond to the computing element also used for readout of the pixelated photodetector. It may, however, also be a separate element.

The processing element may be further configured to determine a positional shift associated with each individual spectrum. Thus, a set of positional shifts may be determined. The positional shifts may be determined, in particular calculated, based on the position of each of the optical fibers or of each of the lenslets with respect to a predetermined reference position. The predetermined reference position may correspond to the position of a central optical fiber or of a central lenslet.

The position of an optical fiber or of a lenslet may correspond to the position of its respective center or centroid.

The center or centroid of a central fiber of the optical fiber bundle may lie at the origin of the coordinate system used.

Alternatively, the positional shifts may be determined based on a measured correlation function. To this end, a test sample may be scanned, followed by calculating cross-correlations between the confocal images associated with a predetermined one of the optical fibers, particularly the central fiber, and each of the remaining fibers in the fiber bundle. These cross-correlations represent N-1 two-dimensional images, with N being the number of optical fibers in the fiber bundle. The position of the most intense pixel in each cross-correlation image determines the spatial shift between the confocal images used for the corresponding cross-correlation and, thus, the positional shift of the respective optical fiber to the predetermined one of the optical fibers. In this case, particularly, the center or centroid of the predetermined one of the optical fibers may lie at the origin of the coordinate system used.

The step of determining a subband intensity may be performed before or after applying the positional shifts. If adding up of the individual spectra is performed after applying the positional shifts, the step of determining a subband intensity is performed thereafter.

The microscope may be configured such that a specimen is scannable so that for a plurality of scanning positions, particularly arranged in a regular raster, light emerging from each of said scanning positions may be coupled into the optical fibers of the fiber bundle and individual spectra are recordable for the light of each optical fiber of the fiber bundle. Each individual spectrum may then again be processed as indicated above. In this way, it is possible to obtain an image of the specimen in the selected spectral band. By accounting for the spatial arrangement of the optical fibers or the lenslet array, it is possible to obtain a high spatial resolution while maintaining a high light efficiency obtained by adding up the collection area of the individual fibers.

For improved light efficiency, the microscope may particularly be configured such that the diameter of the optical fibers is less than the size of the Airy disk in the position of an input end of the optical fibers or of a lenslet array used to couple light into the optical fibers. As diameter of an optical fiber, particularly, its core diameter is used herein.

The core diameter of the optical fibers of the fiber bundle may particularly be between 25 $\mu$m and 100 $\mu$m.

The invention further provides the use of an above-described confocal microscope for Raman microscopy. For Raman microscopy, the large light collection area associated with the use of a fiber bundle is particularly advantageous, since Raman signals are typically very weak (only one in 10 million photons is Raman scattered). The selected spectral band may, in this case, be the spectral band in which Raman-scattered light occurs.

The confocal microscope may have one or more of the above-described features.

Alternatively, the above-described confocal microscope may be used for fluorescence microscopy as well.

The invention further provides a method of obtaining an image of a specimen using confocal microscopy as claimed in claim 10. This method may be performed with an above-described confocal microscope. The confocal microscope may have one or more of the above-described features.

The invention further provides a computer-readable medium according to claim 11.

Advantageous embodiments will now be described in combination with the enclosed figures.

Figure 1    shows the basic set up of a confocal microscope according to an embodiment of the invention;

Figure 2    illustrates a fiber bundle used in a confocal microscope according to an embodiment of the invention; and

Figure 3    illustrates a lenslet array used in a confocal microscope according to an embodiment of the invention.

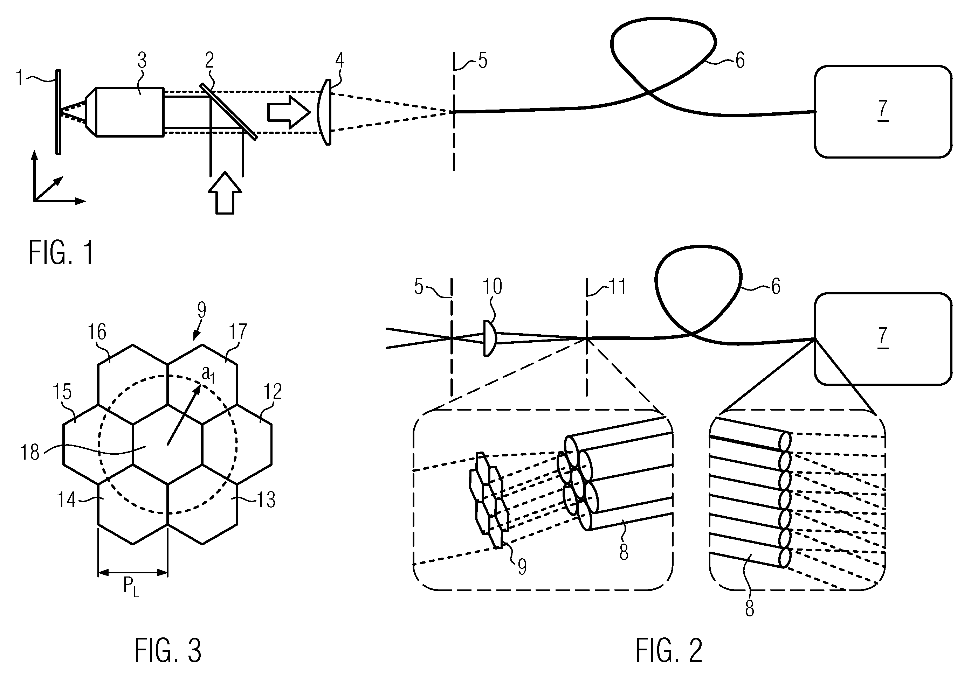

An exemplary confocal microscope shall now be described with reference to Figure 1.

The microscope comprises a three-dimensionally movable stage 1 on which a specimen may be arranged, for instance, via a specimen carrier (not shown).

Via a dichroic mirror 2, light from an excitation light source, particularly an excitation laser may be directed towards the specimen and focused in one point of the specimen via an objective 3. The illuminated point of the specimen corresponds to a particular scanning position of the stage 1.

Light emitted by the specimen in response to the excitation via the excitation light then again passes the dichroic mirror and is focused via a tube lens 4 in the confocal plane 5. The light emitted by the specimen may be fluorescent light, phosphorescent light, or scattered excitation light. For instance, the light emitted by the specimen may include Raman emission originating from Raman scattering of the excitation light in the specimen.

The exemplary microscope further comprises a fiber bundle 6 comprising two or more optical fibers (not shown). One end of the fiber bundle is arranged in the focal plane 5 so that light focused via the tube lens 4 can be coupled into the optical fibers of the fiber bundle 6.

The other end of fiber bundle 6 is coupled to a spectrometer 7. This spectrometer 7 may comprise imaging optics, a dispersive element, such as a diffraction grating, and a pixelated photodetector. The dispersive element is arranged between the output end of the fiber bundle 6 and the pixelated photodetector. In this way, it is possible to record a continuous spectrum of light emitted from the specimen. This spectrum may be further used, for instance, for Raman imaging.

The fiber bundle of Figure 1 is preferably a round-to-linear fiber bundle, as illustrated in Figure 2. This exemplary fiber bundle 6 shown in Figure 2 includes seven optical fibers 8 that are hexagonally stacked at the input end while linearly arranged at the output end, which is coupled to the spectrometer 7.

For coupling light into the optical fibers 8 of the fiber bundle 6, an optional lenslet array 9 may be used, which will be further described below with reference to Figure 3. To account for possible size differences between the lenslet array 9 and the input end of the fiber bundle 6, an optional magnifying lens 10 may be used. In this case, the lenslet array 9 or the input end of the fiber bundle 6 is not arranged in the confocal plane 5, but in a further confocal plane 11 obtained via the additional magnifying lens 10.

Figure 3 shows the optional hexagonal lenslet array 9 shown in Figure 2 in further detail. A central lenslet 18 is surrounded by six surrounding lenslets 12 - 17. At the interfaces of the lenslets to each other, the lenslets contact each other directly. Thus, no space is left between the lenslets at the interfaces. The lenslet array 9 improves the coupling efficiency by preventing losses otherwise caused by gaps between the individual fibers 8 of the fiber bundle 6.

The above-described exemplary setup may be used for Raman microscopy. This application is further detailed below for illustrational purposes.

A specimen arranged on stage 1 may be raster scanned by a tightly focused laser beam. The exemplary excitation vacuum wavelength is 532 nm and the objective 3 is a dry lens with a magnification of 50 and a NA (numerical aperture) of 0.75. The inelastically scattered (thus red-shifted) light may be collected by the objective lens 3 and focused into the collection fiber bundle 6. The light is then analyzed by a spectrometer 7 which finally provides the desired information about the specimen's chemical composition.

Particularly, at one end of the bundle 6 the individual fibers 8 are hexagonally packed, while they are arranged along a straight line at the other end. Using such a "round-to-linear" fiber bundle 6 allows to record individual spectra for each fiber 8 in the bundle 6 (seven in this embodiment). A hexagonal lenslet array 9 in front of the hexagonal end maximizes the coupling efficiency by preventing losses otherwise caused by the gaps between individual fibers.

In this example a fiber bundle with a fiber-pitch of 220 $\mu$m (e.g. Thorlabs BFL200LS02) in combination with a hexagonal lenslet array with 200 $\mu$m pitch (e.g. APH-Q-P200-R2.5 from Advanced Microoptic Systems) is used. The resulting entrance aperture comprises seven lenslets with an effective diameter of about 600 $\mu$m, which is larger than the core diameter of standard collection fibers 8 (varying from 25 $\mu$m to 100 $\mu$m). This mismatch in size demands an additional magnification (in this example about 8-fold) in order to adapt the size of the focal spot to the diameter of the entrance aperture. In contrast to the objective lens 3, which needs to meet high imaging quality standards, the quality demands on the second magnifying lens 10 are lower as it merely needs to magnify an on-axis light spot of about 50 $\mu$m at a very low numerical aperture of about 0.015. For this reason it is possible to use a low-cost singlet lens that introduces reflection losses of less than 1%.

The achievable image resolution is determined by the diameter of a single lenslet (equivalent to a 25 $\mu$m fiber in an exemplary configuration), while the light efficiency is determined by the diameter of the whole entrance aperture consisting of seven lenslets (equivalent to a 75 $\mu$m fiber in an exemplary configuration).

In order to construct an image of the specimen in a specific spectral band from the recorded data, the following exemplary method steps may be performed, the steps being referred to as "pixel-reassignment". The first step of this post-processing technique comprises calculating sub-band intensities for each of the N (in this example N=7) parallel recorded spectra $S_n(\vec{x}, k)$ at each recorded scanning position $\vec{x}$:

$$I_n(\vec{x}) = \sum_{k=k_1}^{k_2} S_n(\vec{x}, k) \qquad (1)$$

Here, $\vec{x}$ are the spatial and $k$ the spectral coordinates, $k_1$, $k_2$ start and end points of the desired spectral band and $n \in [1, N]$ the image index. The thus determined quantity $I_n$ represents a confocal Raman image provided by fiber $n$. The images show positional shifts $\vec{\Delta}_n$, which are determined by the lateral positions of the corresponding hexagonal lenslets $\vec{a}_n$ at the entrance aperture (see Fig. 3 for details) and the total magnification $M_{tot}$, i.e. the product of the magnifications provided by the objective 3 and the magnifying lens 10 in front of the lenslet array 9:

$$\vec{\Delta}_n = \frac{\vec{a}_n}{2 M_{tot}} \qquad (2)$$

As illustrated in Figure 3, the positions $\vec{a}_n$ for $n \in [1,6]$ (lenslets 12 - 17) lie on a circle of radius $P_L$, where $P_L$

is the lens pitch of the hexagonal lenslet array 9:

$$\vec{a}_n = P_L \left[ \cos\left( n\frac{\pi}{3} \right), \sin\left( n\frac{\pi}{3} \right) \right], \quad n \in [1,6] \qquad (3)$$

The position of the central lenslet, $\vec{a}_7$ (lenslet 18), lies at the origin of the coordinate system.

The final high resolution Raman image is calculated as the sum of the sub-band intensities after applying the positional shifts:

$$I_{final}(\vec{x}) = \sum_{n=1}^{N} I_n(\vec{x} + \vec{\Delta}_n) \qquad (4)$$

The number of "pixels", i.e. lenslets and fibers in the fiber bundle 6 can be freely chosen. In principle, the benefit of pixel-reassignment increases with the number of used fibers, with the resolution gain converging at approximately $\sqrt{2}$. However, using more pixels does also require recording more spectra in parallel, thus slowing down the acquisition speed and increasing readout and dark noise as more lines will have to be read out from the pixelated photodetector.

For the example described above with a fiber bundle 6 of seven fibers 8, numerical simulations predict a transverse resolution improvement of 25 % compared to a single-fiber light collection of equivalent light collection efficiency (32 % improvement for a bundle of 19 fibers). Conversely, one can also define a signal gain by comparing the total signals in images of equal resolution. For this case the exemplary detection scheme provides a signal gain of 2.3 compared to a standard confocal Raman image (single-fiber collected) of equivalent resolution (signal gain of 4.6 for a bundle of 19 fibers predicted).

Although the previously discussed embodiments and examples of the present invention have been described separately, it is to be understood that some or all of the above-described features can also be combined in different ways. The above discussed embodiments are particularly not intended as limitations, but serve as examples, illustrating features and advantages of the invention.

**Claims**

1. A confocal microscope comprising:

   a pixelated photodetector;
   a fiber bundle (6) comprising two or more optical fibers (8), wherein the fiber bundle (6) is arranged such that light emerging from a specimen can be coupled into the optical fibers (8) of the fiber bundle (6); and
   a dispersive element;
   **characterized in that**
   the dispersive element is arranged between the fiber bundle (6) and the pixelated photodetector.

2. The confocal microscope according to claim 1, wherein the fiber bundle (6) is a round-to-linear fiber bundle.

3. The confocal microscope according to claim 1 or 2, further comprising an array (9) of lenslets for coupling the light into the optical fibers (8) of the fiber bundle (9).

4. The confocal microscope according to claim 3, wherein the lenslets (12; 13; 14; 15; 16; 17; 18) are hexagonal lenslets.

5. The confocal microscope according to any one of the preceding claims, wherein the fiber bundle (6), the dispersive element and the pixelated photodetector are arranged such that an individual spectrum is recordable for the light of each optical fiber (8) of the fiber bundle (6).

6. The confocal microscope according to claim 5, further comprising a processing element configured to process the recorded spectra by a method comprising the following steps:

determining, from each of the individual spectra, a sub-band intensity of a selected spectral band by adding up the intensity values of the respective individual spectrum falling within the selected band;
applying a positional shift to the individual spectra or to the determined sub-band intensities, the positional shift accounting for the spatial arrangement of the optical fibers (8) of the fiber bundle (6) or of the lenslets of the lenslet array (9) used for coupling light into the optical fibers (8) of the fiber bundle (6); and
adding up the individual spectra or the sub-band intensities after applying the positional shifts.

7. The confocal microscope according to claim 5 or 6, wherein the microscope is configured such that a specimen is scanable so that for a plurality of scanning positions, particularly arranged in a regular raster, light emerging from each of said scanning positions may be coupled into the optical fibers (8) of the fiber bundle (6) and individual spectra are recordable for the light of each optical fiber (8) of the fiber bundle (6).

8. The confocal microscope according to any one of the preceding claims, wherein the microscope is configured such that the diameter of the optical fibers (8) is less than the size of the Airy disk in the position of an input end of the optical fibers (8) or of a lenslet array (9) used to couple light into the optical fibers (8).

9. Use of a confocal microscope according to any one of the preceding claims for Raman microscopy.

10. Method of obtaining an image of a specimen using confocal microscopy, the method comprising:

providing a confocal microscope according to any one of claims 1 to 8;
obtaining a dataset comprising an individual spectrum associated with each optical fiber of a fiber bundle of the confocal microscope for a plurality of scanning positions of a specimen;
determining, from each of the individual spectra, a sub-band intensity of a selected spectral band by adding up the intensity values of the respective individual spectrum falling within the selected band;
applying a positional shift to the individual spectra or to the determined sub-band intensities, the positional shift accounting for the spatial arrangement of the optical fibers of the fiber bundle or of a lenslet array used for coupling light into the optical fibers of the fiber bundle; and
adding up the individual spectra or the sub-band intensities after applying the positional shifts.

11. A computer-readable medium having computer-readable instructions thereon, which when executed by a processor, causes said processor to execute a method comprising the steps of:

receiving a dataset comprising an individual spectrum associated with each optical fiber of a fiber bundle of a confocal microscope for a plurality of scanning positions of a specimen;
determining, from each of the individual spectra, a sub-band intensity of a selected spectral band by adding up the intensity values of the respective individual spectrum falling within the selected band;
applying a positional shift to the individual spectra or to the determined sub-band intensities, the positional shift accounting for the spatial arrangement of the optical fibers of the fiber bundle or of a lenslet array used for coupling light into the optical fibers of the fiber bundle; and
adding up the individual spectra or the sub-band intensities after applying the positional shifts.

FIG. 1

FIG. 2

FIG. 3

Europäisches
Patentamt

European
Patent Office

Office européen
des brevets

# EUROPEAN SEARCH REPORT

Application Number

EP 16 16 6114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2014 010216 A (LITHOTECH CO LTD; TOKYO INSTR INC) 20 January 2014 (2014-01-20) * paragraphs [0004], [0007], [0008], [0016], [0022], [0025], [0026]; figure 1 * | 1-5,7-9 | INV. G02B21/00 |
| X | JP 2012 237647 A (UNIV TOKYO; TOKYO INSTR INC) 6 December 2012 (2012-12-06) * paragraphs [0021], [0024] - [0026]; figure 1 * | 1-5,7-9 | |
| A | US 2007/206185 A1 (TUSCHEL DAVID [US] ET AL) 6 September 2007 (2007-09-06) * paragraph [0038]; figure 2 * | 1-11 | |
| A | US 2003/231305 A1 (ZENG HAISHAN [CA]) 18 December 2003 (2003-12-18) * paragraphs [0029], [0030]; figure 5 * | 1-11 | |

TECHNICAL FIELDS
SEARCHED      (IPC)

G02B

The present search report has been drawn up for all claims

| Place of search | Date of completion of the search | Examiner |
|---|---|---|
| Berlin | 23 September 2016 | Verdrager, Véronique |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 16 6114

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2016

| Patent document cited in search report | | Publication date | Patent family member(s) | | Publication date |
|---|---|---|---|---|---|
| JP 2014010216 | A | 20-01-2014 | NONE | | |
| JP 2012237647 | A | 06-12-2012 | NONE | | |
| US 2007206185 | A1 | 06-09-2007 | EP<br>US<br>WO | 1994418 A2<br>2007206185 A1<br>2007103894 A2 | 26-11-2008<br>06-09-2007<br>13-09-2007 |
| US 2003231305 | A1 | 18-12-2003 | US<br>US | 6486948 B1<br>2003231305 A1 | 26-11-2002<br>18-12-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016020459 A1